# EUROPÄISCHE PATENTANMELDUNG

(11) **EP 4 216 085 A1**
(43) Veröffentlichungstag der Anmeldung: **26.07.2023**
(21) Anmeldenummer: 22152226.1
(22) Anmeldetag: 19.01.2022
(51) Int. Cl.: G06F 21/44, G06F 21/12, H04L 9/40

(54) **VERFAHREN ZUR SICHEREN BEREITSTELLUNG EINES DIENSTES DURCH EINE ZENTRALE BEREITSTELLUNGSINSTANZ, COMPUTERPROGRAMMPRODUKT UND GERÄT**

(71) Anmelder: Siemens Aktiengesellschaft, 80333 München (DE)
(72) Erfinder: Albrecht, Harald, 90475 Nürnberg (DE); Balduf, Jochen, 76707 Hambrücken (DE); Volkmann, Frank, 90475 Nürnberg (DE)
(74) Vertreter: Siemens Patent Attorneys

(57) **Zusammenfassung**

Die Teilnehmer am Ökosystem der Industrial Edge wünschen sich weitgehend automatische Integrationsmechanismen, möglichst ohne Eingriffe in heute gängige OPC UA-Software-Stacks.

Die OPC UA Server-Applikationen sind jedoch ohne weitere Maßnahmen nicht von außen erreichbar, so dass der Anwender die Server-Ports zwischen der Applikations-Sicht und der Edge-Geräte-Sicht abwägen muss und dabei auf Port-Konflikte und das Einhalten möglicher Einschränkungen der Netzwerkumgebung achten muss, sowie die anderen Anteile seiner Automatisierungsapplikation mit den Servern über die konkreten Netzwerkadressierungsinformationen verknüpfen.

Es wird vorgeschlagen, ein initiales Trust Verhältnis (mit einem "Ur-Zertifikat") herzustellen. Dieses Ur-Zertifikat / initial Trust-Verhältnis entspricht dem CA-Zertifikat der Bereitstellungsinstanz.

Weiterhin wird vorgeschlagen, einen Verbund aus "Proxy plus Lokalem Verzeichnisdienst (Local Discovery Server, LDS) plus interner Verzeichnisdienst (Global Discovery Service, GDS) (140) um eine interne Registerinstanz, oder auch Registrar zu erweitern. Technisch kann der Registrar beispielsweise eine Ergänzung des internen Verzeichnisdienst Servers IGDS sein.

## Beschreibung

Industrielle Automatisierungssysteme umfassen üblicherweise eine Vielzahl von, über ein industrielles Kommunikationsnetz miteinander vernetzten Automatisierungsgeräte und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtualisierten Umgebungen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Mit der Edge Technologie können beispielsweise automatisierungstechnische Anwender selbst einfach und modular die von ihnen gewünschten Funktionalitäten für ihre Automatisierung in Form von Applikationen installieren, aktualisieren und erweitern. Einerseits profitieren Anwender von zentralisierter und einfach skalierbarer Verwaltung auch vieler, im Folgenden auch Industrial Edge genannte Geräte, andererseits vom Markt, der ebenfalls Drittanbieter dieser Applikationen umfasst. Ein wesentlicher weiterer Aspekt, ist der Wunsch der Automatisierungsanwender, Applikationen unterschiedlicher Anbieter möglichst ohne zusätzlichen Integrationsaufwand einfach installieren und sofort in Betrieb nehmen zu können.

Für einen semantisch hochwertigen und sicheren Datenaustausch hat sich in der Automatisierungstechnik OPC UA (OPC Unified Architecture, www.opcfoundation.org) etabliert. Applikations-Anbieter steigern die Attraktivität ihrer Applikationen, indem sie beispielsweise die von diesen berechneten Daten aus einer Produktionsdatenanalyse, Bildanalyse und dergleichen mehr, über einen integrierten OPC UA Server anderen Automatisierungsfunktionen bereitstellen. Gegenüber der klassischen Gerätewelt sind nun aber in das gleiche (Industrial Edge) Gerät nicht nur ein klassischer Geräte-OPC-Server zu integrieren, sondern mehrere Applikationen mit OPC UA Server Funktionalität verschiedener (Dritt-) Anbieter.

Ablaufsteuerungskomponenten sind insbesondere Software-Container, die jeweils von anderen Software-Containern oder Container-Gruppen isoliert innerhalb der Ablaufsteuerungsumgebung auf einem Host-Betriebssystem einer Server-Einrichtung ablaufen. Grundsätzlich können für die Ablaufsteuerungskomponenten auch alternative Micro-Virtualisierungskonzepte, wie Snaps, verwendet werden.

Die Ablaufsteuerungsumgebung kann beispielsweise eine Docker Engine oder einen Snap Core umfassen, die auf einer Server-Einrichtung abläuft. Vorteilhafterweise nutzen die Software-Container jeweils gemeinsam mit anderen auf der jeweiligen Server-Einrichtung ablaufenden Software-Containern einen Kernel des Host-Betriebssystems der Server-Einrichtung. Speicherabbilder für die Software-Container können beispielsweise aus einem durch eine Vielzahl von Nutzern lesend bzw. schreibend zugreifbaren Speicher- und Bereitstellungssystem abgerufen werden.

Auch Anwender von solchen, mittels beispielsweise Containervirtualisierung oder vergleichbaren Virtualisierungskonzepten realisierten, Steuerungsanwendungen für industrielle Automatisierungssysteme erwarten eine möglichst unkomplizierte Integration derartiger Anwendungen in ihre bestehende Infrastruktur.

Wird eine OPC UA Server-Applikation in einer Virtualisierungslösung wie beispielsweise einem (Docker) Container ausgeführt, dann ist die Applikation zunächst einmal frei in den von ihr belegten Netzwerkressourcen wie insbesondere TCP-Ports - hier ist insbesondere bei OPC UA der Port 4840 für einen einzelnen Server vordefiniert.

Eine manuelle Integration, wie in der bisherigen Einzelgerätewelt, ist im industriellen Umfeld zu aufwändig und fehlerträchtig, und teilweise aufgrund mangelnder Konfigurationspunkte in den OPC UA Servern sogar unmöglich. Diese Integration umfasst nicht nur die Applikationen im Gerät, sondern auch das Zusammenspiel Geräte-externer Anteile der Automatisierungs-Applikationen mit den Geräte-Applikationen.

Je nach Netzwerkanbindung und verwendeter Ablaufsteuerungsumgebung treffen insbesondere OPC UA Server auf höchst unterschiedliche anwenderseitige Konfigurationen, die durch Entwickler von Steuerungsanwendungen bei automatisierten Konfigurationsverfahren für die Steuerungsanwendungen berücksichtigt werden müssen. Bei der Netzwerkanbindung stellen anwenderseitig knappe IP-Adress- und TCP-Portnummernbereiche besondere Herausforderungen im Rahmen der Integration von Steuerungsanwendungen in eine bestehende Infrastruktur dar. Auch die Nutzung von privaten Portnummern führt zu vielfältigen mit der Netzwerkinfrastruktur, beispielsweise das (manuelle) Freischalten der Ports in Firewalls.

Die OPC UA Server-Applikationen sind jedoch ohne weitere Maßnahmen nicht von außen erreichbar, so dass der Anwender die Server-Ports zwischen der Applikations-Sicht und der Edge-Geräte-Sicht abwägen muss und dabei auf Port-Konflikte und das Einhalten möglicher Einschränkungen der Netzwerkumgebung achten muss - wie beispielsweise die begrenzte Menge der in Firewalls freischaltbaren Ports und deren konkrete Wertebereiche bzw. voreingestellte Standardregeln ohne weiteren (Konfigurations-) Aufwand verwenden kann.

Außerdem muss der automatisierungstechnische Anwender die anderen Anteile seiner Automatisierungsapplikation mit den Servern über die konkreten Netzwerkadressierungsinformationen verknüpfen.

Das bedeutet, ein Entwickler muss bereits die Adressinformationen (Port) auswählen und festlegen, bevor der spätere Einsatz der Applikation bekannt ist. Dies hat zur Folge, dass bei der Inbetriebnahme eine aufwändige Umkonfiguration durchgeführt werden muss.

### Stand der Technik

Anwender und Entwickler für modulare Installationen von Server-Applikationen in Automatisierungsystemen wünschen eine über die reine Konnektivität zwischen Clients und Servern hinausgehende abgesicherte Kommunikation, beispielsweise gemäß OPC UA-Standard. Die abgesicherte Kommunikation soll dabei möglichst einfach und vor allem möglichst ohne zusätzlichen Aufwand und Expertenwissen bei Einrichtung und Betrieb möglich sein. Zudem müssen mehr als nur ein einzelner UA-Server unterstützt werden können. Die Teilnehmer am Ökosystem der Industrial Edge wünschen deshalb weitgehend automatische Integrationsmechanismen, möglichst ohne Eingriffe in heute gängige OPC UA-Software-Stacks.

Für die im Folgenden beschriebene Verfahren ist es Voraussetzung, dass (OPC UA-)Server auf einem Industrial Edge / Container System, beispielsweise über einen intelligenten Proxy, für Clients auffindbar und erreichbar sind.

Um eine geforderte sichere Bereitstellung zu gewährleisten, wird ein passendes Zertifikat verlangt. Ohne weitere Maßnahmen wird ein Verbindungsaufbau, beispielsweise über den Proxy mit einem inneren Server, vom OPC UA Client bei der Prüfung des Server-Zertifikats abgebrochen, da die im Zertifikat eingetragenen, innerhalb des Teilnetzes gültigen Adressierungsinformationen, auch "inneren" oder internen Endpunkt-Adresse(n) (EndpointURIs, Uniform Resource Identifier) genannt, des Servers nicht mit den für die Clients sichtbaren (und durch den Proxy erstellten "äußeren" oder externen) EndpointURIs übereinstimmen.

Ein OPC UA Proxy agiert beispielsweise analog zu (Ingress) Web-Proxies, indem er die auf einem gemeinsamen Netzwerkport eingehende Verbindungen anhand zusätzlicher Kriterien auf der Ebene der OPC UA-Applikationsschicht (aus Sicht des ISO/OSI-Schichtenmodells) weiterschaltet.

Die Manipulation der Endpunkt-Adressen (EndpointURIs) der OPC UA Server-Apps/Instanzen durch den Proxy ist erforderlich sobald mehr als ein Server aktiviert wurde oder der externe IPoder DNS-Name des Hosts unbekannt ist oder sich dynamisch ändern kann.

Die Generierung/Verwendung von selbstsignierten Zertifikaten mit den "falschen" Netzwerkparametern (Hostname/IP und Port) durch den Server ist eine systembedingte Eigenschaft gängiger Virtualisierungslösungen (wie Containern), da nur diese dem OPC UA Server bekannt sind.

Bei der Ablehnung des Serverzertifikats durch den Client, handelt es sich daher um ein grundlegendes Problem gängiger Virtualisierungslösungen (wie Containern), da einem darin ausgeführten (OPC UA) Server immer stets nur seine inneren Netzwerkparameter (Hostname/IP und Port) des virtuellen Netzwerkes bekannt sind, aber diese nicht mit den Netzwerkparametern des für den Client erreichbaren Host-Systems übereinstimmen.

Bislang führt dies zu der Schwierigkeit, dass einerseits die Entwickler von (OPC UA) Server-Applikationen geeignete zusätzliche Konfigurationsmechanismen vorsehen müssen und andererseits industrielle Anwender bei Inbetriebsetzung von Industrial Edge-Geräten und deren (OPC UA) Server-Applikationen die erforderlichen und für den Verbindungsaufbau geeigneten Server-Zertifikate manuell erstellen und in die einzelnen (OPC UA) Server-Applikationen installieren müssen.

Anwender und Applikations-Entwickler wünschen sich deshalb das automatisierte Abwickeln der Schritte, um möglichst rasch und ohne Aufwand ein sicher laufendes System zu bekommen. Durch die bekannten OPC UA-Standards sind solche Lösungen derzeit nicht erfasst.

Applikations-Entwickler wünschen sich darüber hinaus, dass sie möglichst wenig (idealerweise keine) spezielle Vorkehrungen für ihre Industrial-Edge Container berücksichtigen müssen, also eine sogenannte out-of-the-box-Lösung.

Damit der Server ein gültiges Zertifikat erhält muss der Anwender heute zunächst manuell ein Zertifikat mit den konkreten Endpunkt-Informationen (EndpointURIs) des Hostsystems erstellen. Diese sind erst im laufenden Betrieb sicher bekannt. In einem zweiten Schritt muss das Zertifikat auf den (OPC UA) Server geladen werden, wobei dieses Laden abhängig vom jeweiligen (OPC UA) Server und dessen Lade-Mechanismus ist.

Ein automatisierter Prozess kann hierfür nicht eingesetzt werden, da bei dem zugrundliegenden "Certificate Signing Request" (CSR) des OPC UA Servers gegenüber einem Zertifikatsserver ebenfalls nur die inneren Netzwerkparameter verwendet werden.

In einer älteren Anmeldung "Verfahren, Computerprogrammprodukt und Vorrichtung zur Erstellung eines Zertifikates für die sicheren Bereitstellung von Diensten." wurde ein Verfahren in Form eines Verbundes aus einem Proxy, einem lokalen Verzeichnisdienst (Local Discovery Server, LDS) sowie einem Verzeichnisdienst (Global Discovery Service, GDS) beschrieben, durch das mehrere OPC UA Server auf einem Industrial Edge- beziehungsweise Container-System über einen gemeinsamen Port (beispielsweise dem notorisch vorbekannten 4840) für OPC UA Clients sicher erreichbar sind und mit gültigen Zertifikaten konfiguriert werden können.

Für den hierbei beschriebenen Mechanismus ist es notwendig, dass die OPC UA Server eine Authentifizierung enthalten, die der Verzeichnisdienst GDS als Autorität für das initiale Verteilen der Zertifikate (Enrollment) akzeptiert (vgl. Standard OPC 10000-12 - Part 12: Discovery and Global Services).

Der vorliegenden Erfindung liegt daher die Aufgabe zugrunde, eine sichere Bereitstellung von Diensten zu ermöglichen, durch eine automatisierte Erstellung und sichere Verteilung von passenden Zertifikaten.

Diese Aufgabe wird erfindungsgemäß durch ein Verfahren mit den in Anspruch 1 angegebenen Merkmalen gelöst.

Die Aufgabe wird weiterhin durch einem Computerprogrammprodukt mit den im Anspruch 9 angegebenen Merkmalen und durch ein Gerät mit den im Anspruch 10 angegebenen Merkmalen gelöst.

Weitere vorteilhafte Ausgestaltungsformen sind in den Unteransprüchen angegeben. Die Ausführungsformen in der Figurenbeschreibung sind nur beispielhaft zu verstehen und sollen nicht für den Schutzbereich einschränkend gelesen werden.

Die oben angesprochene Authentifizierung ist derzeit ein manuell durchzuführender Schritt. Es müssen dem Fachmann als "Credentials" bekannte, Berechtigungsnachweise (auch Login-Daten, Anmeldedaten, oder Anmeldeinformationen genannt) für eine Identität konfiguriert werden, die die Autorität hat, Zertifikatsmaterial zu konfigurieren.

Das Bereitstellen (bekannt als "Deployment") der initialen Credentials (Username/Passwort, Security Token, Zertifikat etc.) benötigt heute immer eine manuelle Konfiguration, in der Regel mit Hilfe eines Konfigurationstools. Das bedeutet im Stand der Technik zum Beispiel das Editieren einer Sicherheits-Konfigurationsdatei und anschließendes Hochladen, entweder in ein Deployment-Management-System oder in die bereits (ungesichert) laufende Applikation.

Diese Credentials können z. B. über das Applikations-Management der Edge Infrastruktur konfiguriert werden. Will man die Authentizität durch ein Zertifikat erreichen (und damit vermeintlich zu automatisieren) ergibt sich daraus ein klassisches "Henne - Ei" Problem.

Es wird daher vorgeschlagen, ein initiales Trust Verhältnis (mit einem "Ur-Zertifikat") herzustellen. Dieses Ur-Zertifikat / initial Trust-Verhältnis entspricht dabei dem CA (Certificate Authority)-Zertifikat der Bereitstellungsinstanz.

Um dieses Problem weiterhin zu lösen, wird vorgeschlagen einen Verbund aus "Proxy plus Lokalem Verzeichnisdienst (Local Discovery Server, LDS) plus interner Verzeichnisdienst (Global Discovery Service, GDS) (140) um eine interne Register-instanz, oder auch Registrar zu erweitern. Technisch kann der Registrar beispielsweise eine Ergänzung des internen Verzeichnisdienst Servers IGDS sein.

Die Erfindung wird durch die Figuren genauer dargestellt, dabei zeigen die Figuren im Überblick:
Figur 1 einen Überblick des erfindungsgemäßen Systems,
Figur 2 eine Ergänzung des in Figur 1 dargestellten Systems mit ergänzenden Lizenzinformation,
Figur 3 einen Standard-Kommunikationsablauf bei Kontaktaufnahme von Server und Client,
Figur 4 und 5 eine Ergänzung zu Figur 1 mit mehreren Applikationen auf dem Gerät.

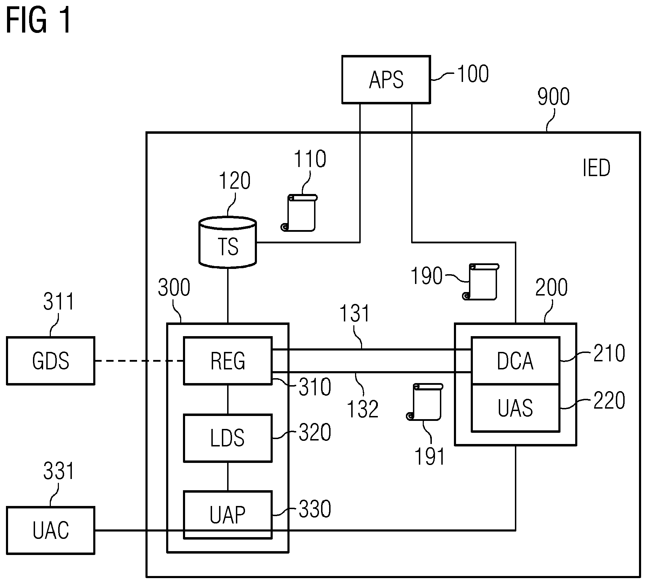

Zwei Aufgaben des im OPC Foundation Part 211 beschriebene Device Provisioning werden durch das beschriebene Verfahren, wie auch in Figur 1 näher dargelegt.

Aufgabe 1:
Eine Bereitstellungsinstanz "Application Store" APS, 100, über den die Dienstanbieter Applikations Instanz, OPC UA Server UAS, 220, zentral angeboten und verteilt wird, wird im Sinne des Device Provisioning zum "Hersteller" der Applikationsinstanz 200. Die Applikationsinstanz wird hierbei analog wie ein physikalisches Gerät ("Hardware Device") behandelt.

In dieser Rolle als Hersteller erzeugt die Bereitstellungsinstanz 100 ein Dienstzertifikat, 190 und ein dazu passendes Gerätezertifikat, beispielsweise ein IEEE 802.1AR Initial Device Identifier iDevID, 110 oder IDevID (locally significant Device Identifier) für die Applikationsinstanz.

Das iDevID wird zur Autorisierung der Applikation / der Registrars verwendet. Ist dies erfolgreich wird vom Registrar optional das passende DCA-Zertifikat oder gleich ein Application Instance Certificate (AIC, auf die Appikationsinstanz einmalig ausgestelltes Kommunikationszertifikat) ausgestellt und zur Applikation transportiert. Es wird dann für den späteren Verbindungsaufbau vom Client verwendet, enthält also die korrekten Adressdaten.

Die Gerätezertifikate 110, das einem Gerät IED, 900 zugwiesen sind, können in einer vorteilhaften Ausgestaltung der Erfindung in einem eigens dafür vorgesehenen Gerätezertifikat Speicher TS, 120 auf dem Gerät abgelegt werden. Das Zertifikat wird durch gängige kryptografische Verfahren so mit der Applikation untrennbar verbunden / verknüpft / verwoben, dass die Applikation damit technisch zu einer "einmaligen" und damit eineindeutiger Instanz wird. Diese Instanz wird durch eine eineindeutige ProductInstanceURI repräsentiert. Sie wird von der Bereitstellungsinstanz erzeugt und ist Teil des Dienstzertifikats 190, sowie des Gerätezertifikats 110. Der kryptografische Prozess sorgt ferner dafür, dass der im Dienstzertifikat enthaltene private Schlüssel nicht auslesbar ist. Der Transport dieser Applikations-Instanz von dem Bereitstellungsinstanz auf das Gerät muss über eine sichere Kommunikation (z. B. TLS, Transport Layer Security) abgesichert werden.

Das Gerätezertifikat 110 wird an die interne Register-Instanz REG 310, der Teil des Verzeichnisdienstes IGDS des OPC UA LDS Proxys 300 sein kann, übertragen. Auch der Proxy 330 ist eine weitere Applikation auf dem Gerät.

Aufgabe 2:
Die Laufzeitumgebung auf dem Gerät IED, 900 (und insbesondere der Proxy/IGDS 300) werden im Sinne der Gerätebereitstellung (Device Provisioning) zum Betreiber ("Operator"), die die Applikation installieren und in Betrieb nehmen wollen: Damit der Verzeichnisdienst, IGDS 300 Zertifikate in die OPC UA Applikation UAS, 220 übertragen kann (zum Beispiel über ein Pushverfahren), wird das Device Provisioning Verfahren zwischen dem Registrar 310 und der Applikation 200 (entspricht der Rolle "Device") durchgeführt.

Bei der Gerätebereitstellung wird das Dienstzertifikat (190) und das Gerätezertifikat (110) dazu verwendet das Device (bei uns die Applikation (200)) gegenüber der zentralen Register-Instanz REG auszuweisen. Das Verfahren wird nun, entgegen des in OPC Foundation Part 21 beschriebene Device Provisioning, in umgekehrter Wirkrichtung verwendet: der als interne Register-Instanz agierende IGDS 310 weist sich gegenüber der Applikation 200 aus, 131 und erhält somit die Autorität, ein Kommunikations-Zertifikat in die Applikation zu übertragen, 132. Dies ist ohne Änderung des Verfahrens möglich, da beim Device Provisioning aufgrund des verwendeten Verfahrens immer ein gegenseitiges Ausweisen erfolgt. Allerdings wird dieser Fakt, dass sich die interne Register-Instanz (als Teil des IGDS, 310) beim Gerät (bei uns der Dienst / die Applikation, 200) ausweist, im Device Provisioning Fall nicht weiter betrachtet und hat keine Auswirkung auf dieses Verfahren. Gegenüber dem Stand der Technik wird das - durch im OPC Foundation Part 21 beschriebene Device Provisioning - aufgebaute Vertrauensverhältnis daher umgekehrt eingesetzt:

Durch den Verbund von "Proxy + LDS + IGDS + interne Register-Instanz" 140 ist es möglich, nicht nur die internen OPC UA Server UAS, 220 Instanzen über einen gemeinsamen Port für einen Client UAC, 303 erreichbar zu machen, sondern auch voll automatisiert mit gültigen Kommunikations-Zertifikaten zu befüllen, so dass eine Verbindung Secure Channel/Communication, 600 aufgebaut werden kann.

Die Software Applikation (der Docker Container) wird als Hardware-Device betrachtet und kann genauso wie ein Hardware-Device in einer optionalen Ausgestaltung der Erfindung mit einer Instanz Identifikation DCA, 210 versehen.

Sobald das DCA Zertifikat ausgestellt wird das iDevID (GeräteInstanzZertifikat) nicht mehr verwendet.

Die Reihenfolge ist also:
1. Die iDevID wird beim Applikationskauf in die Applikation "verwoben".
2. Mit dem iDevID wird das Trustverhältnis zwischen Applikation und Registrar hergestellt.
3. Der Registrar schickt ein DCA Zertifikat zur Applikation.
4. Die Applikation fordert mit Hilfe des DCA Zertifikats ein AIC-Zertifikat beim Registrar an.
5. Der Registrar schickt das AIC Zertifikat zur Applikation, dieses enthält jetzt insbesondere die richtigen externen Adressen.
6. Ein Client kann sich über den Proxy verbinden und "sieht" das AIC mit den richtigen Adressen.

Das DCA wird in OPC UA Part 21 verwendet, um weitere AIC anzufordern. Da dies hier nicht benötigt wird, kann bei uns Schritt 3 und 4 zusammen fallen, indem der Registrar direkt das richtige AIC schickt.

Diese Instanz Identifikation (die jetzt nur Softwaremäßig vorliegt) wird zusammen mit dem Gerätezertifikat 110 dazu verwendet, das Deployment des produktiv einzusetzenden Anwendungsinstanz-Zertifikats (Application Instance Certificate, AIC, 132) ohne weitere manuelle Autorisierungsschritte durchführen zu müssen.

Folgende Randbedingungen müssen berücksichtigt werden:
Bei den bekannten Bereitstellungsverfahren (Device Provisioning) ist es fundamental, dass das Dienstzertifikat 190 (insbesondere der darin enthaltene private Key) vor Auslesen geschützt wird (vgl. Secure Elements). Bei der hier vorgeschlagenen Adaption des Verfahrens auf das Softwareverfahren ist dies nachrangig, da der Transport der Applikation (die dann das iDevID Zertifikat enthält) durchgängig über bekannte Verschlüsselungs-Mechanismen geschützt werden kann (z. B. Transport der Applikations-Instanz über einen TLS-geschützten Kommunikationskanal) .

In Erweiterung zum Device Provisioning nach OPC UA Part 21 wird durch das Verfahren erreicht, dass die Software Applikation dem IGDS (der internen Register-Instanz) vertraut und damit das Zertifikatsenrollment automatisch und ohne weitere, insbesondere manuelle, Autorisierung durchführen darf.

Eine Edge Umgebung wird feststellen wollen, dass es sich um die richtige Applikationsinstanz handelt, also wird OPC UA Part 21 weiterhin auch in seiner gedachten Ausprägung genutzt. Zusätzlich wird in der App überprüft, ob auch das Gerät dasjenige ist, für die die Applikation gekauft wurde. Damit kann vorteilhafterweise auch verhindert werden, dass eine Applikation nur einmal gekauft und dann mehrfach (auf verschiedenen Geräten) ausgerollt und verwendet wird.

Der IGDS (310) des OPC UA LDS Proxy (140) agiert gegenüber der Applikation (200) mit der OPC UA Server Instanz (UAS, 220) als Registrar und führt das Device Provisioning mit der Applikation durch.

Ergebnis dieses "Software-Device Provisioning" Bereitstellungs-Verfahrens ist das automatisierte Übermitteln des korrekten Anwendungsinstanzzertifikat (Device Configuration Application- "Instance Certificate") 132 für die Applikation, das im Weiteren bei der Applikation 200 für das notwendige Trustverhältnis sorgt.

Die Instanz Identifikation DCA sorgt dafür, dass weitere Funktionen der Applikation mit dem notwendigen zertifikatsmaterial versorgt werden können, sofern erforderlich (zum Beispiel weitere Application Instance Zertifikate bei OPC UA Applikationen oder Server-Zertifikate bei HTTPS-Servern).

Mit diesem (DCA- Application Instance Certificate) Anwendungsinstanzzertifikat kann das Bereitstellen des Kommunikations-Zertifikate (Application Instance Zertifikat Deployment) 132 der OPC UA Applikation automatisiert durchgeführt werden, da dieses Zertifikat als Autoritätsbestätigung für die GDS Autorisierung verwendet werden kann: Das GDS Applikationszertifikat und das DCA Zertifikat stehen in einem Trustverhältnis zueinander, dadurch traut die OPC UA Server Applikation (UAS, 220) dem GDS (311) und lässt das Übertragen des Anwendungsinstanzzertifikats der OPC UA Server Applikation zu 132. Das manuelle Einrichten einer beim Verzeichnisdienst GDS autorisierten Authentizität entfällt, da diese Autorisierung nun über das Anwendungsinstanzzertifikat erfolgt. Das Vertrauensverhältnis begründet sich im durchgeführten Bereitstellungs-Prozess, bei dem Dienstzertifikat 190 und Gerätezertifikat (110) benutzt wurden, um die gegenseitige Identität zu überprüfen.

Ergebnis des Device Provisionings war die Ausstellung des DCA Zertifikats. Dies kann jetzt zum Beispiel dieselbe Root Certificate Authority CA wie das Zertifikat des Verzeichnisdiensts GDS 311 und/oder IGDS 300 haben.

Das Vertrauensverhältnis besteht tatsächlich zwischen dem Bereitstellungsinstanz (durch Signieren des Dienst-Zertifikats und des dazugehörigen Gerätezertifikat mit dem CA-Zertifikat des Bereitstellungsinstanz) und dem Edge Host (CA-Zertifikat der Laufzeit-Umgebung).

Bei dem beschriebenen Verfahren liegen zwei Vertrauensbereiche (Trust Domains) vor:
- Der Bereich der Bereitstellungsinstanz: Dienstzertifikat 190 und Gerätezertifikat 110
- Der Bereich der Laufzeit-Umgebung (Anwendungsinstanz-Zertifikate 191, interne Register-Instanz REG, 310), zu dieser kann dann auch ein Anlagen-GDS (302) und weitere Geräte IED, 900 gehören.

Um das ursprünglich für Hardwarekomponenten gedachte Verfahren auf Software zu übertragen, müssen dafür Hürden überwunden werden, z. B. der Schutz eines privaten Schlüssels (in Software derzeit nicht möglich: beispielweise werden durch eine CPU-Hardware-Architektur durchgesetzte Zugriffs"Enklaven" notwendig, die in den heute gängigen Virtualisierungsarchitekturen wie Dockernicht unterstützt werden). Für einen bestmöglichen Schutz werden immer die aktuellen kryptografischen Methoden angewendet, sowie die Applikation 200 über eine verschlüsselte Datenverbindung zwischen dem Bereitstellungsinstanz APS, 100 an das Gerät Industrial Edge Device IED, 900 übertragen. Das Dienst-Zertifikat muss durch kryptografische Funktionen so mit der eigenen Applikation / Dienst-Funktion verbunden werden, dass eine Trennung oder das Auslesen nicht möglich sind. Insbesondere kann in der hier angenommenen Umgebung eines Edge Ökosystems immer sichergestellt werden, dass der Transport der Applikationsinstanz von der Bereitstellungsinstanz 100 zum Gerät 900 sicher verschlüsselt ist.

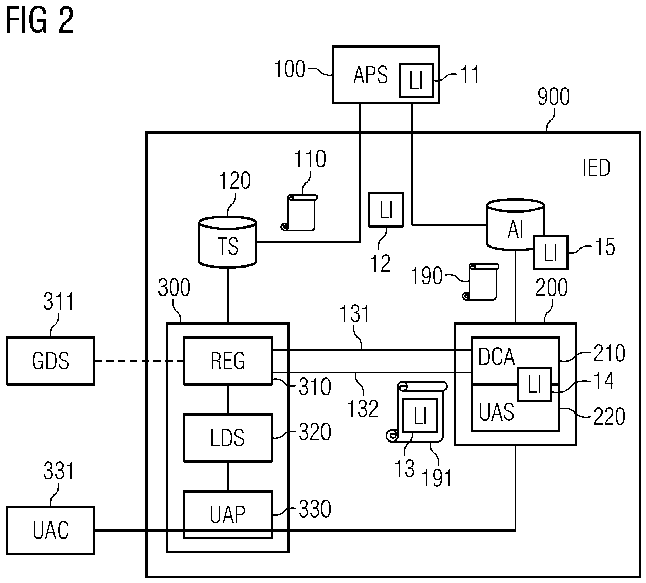

Das oben geschilderte Verfahren kann in einer weiteren vorteilhaften Ausgestaltung noch erweitert bzw. mit anderer Zielsetzung eingesetzt werden, indem das Dienst-Zertifikat und das Gerätezertifikat um Lizenzinformationen LI, 11, ...15 ergänzt werden. Dies ist beispielhaft in der Figur 2 dargestellt.

Das weiter oben beschriebene Vorgehen sorgt dabei für eine fälschungssichere Übertragung des Gerätezertifikats 110, sowie der mit dem Dienst-Zertifikat "verheirateten" Applikation auf das Gerät, IED 900.

Die Lizenzinformationen LI können in das Geräte-Zertifikat zum Beispiel als User-Extension angefügt werden. Diese Extension beeinflusst nicht das oben beschriebene Bereitstellungsverfahren als solches, sondern ist als Additiv zu sehen.

Die Lizenzinformationen werden dabei über zwei Informationskanäle (Gerätezertifikat und Applikations-Deployment mit Dienst-Zertifikat) transportiert, um unterschiedliche Anwendungsszenarien umzusetzen, wie nachfolgend erläutert.

Der User kauft in einer vorteilhaften Ausgestaltung der Erfindung eine Applikation (Dienst) mit einem bestimmten Funktionsumfang, zum Beispiel einer Lizenz um 20 Clients zeitgleich eine Verbindung aufbauen zu können.

Es ist dann keine zusätzliche 3rd-party-Softwarebibliothek für Verkauf und Bereitstellung im Server (Applikation) erforderlich, sondern das Bereitstellen der "runtime"-Lizenzen wird Teil der sowieso schon erforderlichen Infrastruktur für das Zertifikatsmanagement für die sichere Kommunikation.

Die Lizenzinformationen 11 sind im Dienst-Zertifikat 190 und/oder dem dazugehörigen Gerätezertifikat 110 enthalten und werden auf das Gerät Industrial Edge Device IED, 900 hinterlegt (übertragene Application Instance AI, 201). Dadurch stehen die Lizenzinformationen 15 in der Applikation 200 zur Verfügung.

Das (iDevID) Dienst-Zertifikat und damit auch die Lizenzinformationen wird von der internen Register-Instanz durch das Gerätezertifikat 110 als vertrauenswürdig eingestuft und ist gegen Verfälschung gesichert. Nach einer erfolgreichen Validierung der Zertifikate und Herstellung des Vertrauensverhältnisses zwischen der internen Register-Instanz REG 310 und der ausgeführten Dienste-Instanz 200, wird nun das Gerätezertifikat und/oder die darin enthaltenen Lizenzinformationen LI von der internen Register-Instanz REG an die Applikation übertragen, 131, 132. Diese prüft bzw. verwendet nun die Lizenzinformationen, womit diese ihre Gültigkeit erhalten. Damit das funktioniert, müssen das Gerätezertifikat und das Dienst-Zertifikat einen gemeinsamen Trustanker (d. h. die gleiche Zertifikat-ausstellende Bereitstellungsinstanz, 100), sowie dieselbe eineindeutige Adresse haben.

Die Adresse kann beispielsweise eine ProductInstanceURI sein, wichtig ist, dass es sich um eine eineindeutige Kennung handelt. Diese Anforderung stellt OPC UA Part 21 an eine ProductInstanceURI. Auch andere Adressen, wie GUIDs funktionieren.

In einer weiteren vorteilhaften Ausgestaltung der Erfindung ist es dem Anwender zu einem späteren Zeitpunkt möglich, eine neue Lizenz zu erwerben oder eine bereits erworbene Lizenz für einen Dienst UAS zu ändern, zum Beispiel eine Erhöhung der Anzahl der erlaubten zeitgleichen Zugriffe durch Clients UAC. Von der Bereitstellungsinstanz 100 wird dann ein neues Gerätezertifikat 110 mit aktualisierten Lizenzinformationen 11 erstellt und auf das Gerät Industrial Edge Device IED 900, auf der die Instanz der Applikation 200 läuft, übertragen 12. Der Prozess der gegenseitigen Anerkennung der Lizenzen zwischen der Applikation 200 und der zentralen Register-Instanz REG 310 wird dann einmalig erneut durchgeführt und somit die Lizenzinformationen in der Applikation aktualisiert, 13, 14. Alternativ ist es auch möglich, den Prozess der gegenseitigen Anerkennung komplett von Neuem anzustoßen, um eine neue Applikations / Dienst-Instanz mit einem neuen (iDevID) DienstZertifikat 190 mit aktualisierten Lizenzinformationen, sowie ein dazugehöriges Gerätezertifikat 110 zu erzeugen und auf das Gerät IED verfälschungssicher zu übertragen.

Es gibt viele verschiedene Lizenzmodelle, die mit diesem Verfahren umgesetzt werden können: beispielsweise abhängig von der
- Anzahl der Clients, Dienstabnehmer
- Laufzeit des Dienstes / der Applikation,
- Speichergröße (Datenbank), oder beispielsweise dem
- Funktionsumfang.

Die auf einem Gerät Industrial Edge mit Container System laufenden OPC UA Server / Dienst-Instanzen können mit Hilfe des hier beschriebenen Verfahrens voll automatisiert mit gültigen Zertifikaten befüllt werden. Besonders vorteilhaft ist, dass im Vergleich zum bekannten Stand der Technik keine weiteren Konfigurationsschritte benötigt werden, als diejenigen, die schon für die Inbetriebnahme eines Edge Host Gerätes und der Bereitstellungsinstanz notwendig sind.

Die zu vergebenden Zertifikate sind dabei spezifisch nicht nur auf eine einzelne OPC UA Serverklasse, sondern auf genau eine einzelne OPC UA Serverklassen-Instanz auf einem spezifischen Edge-Gerät ausgelegt, was die Sicherheit der vorgeschlagenen Lösung gegenüber Fälschung und Kopie erhöht.

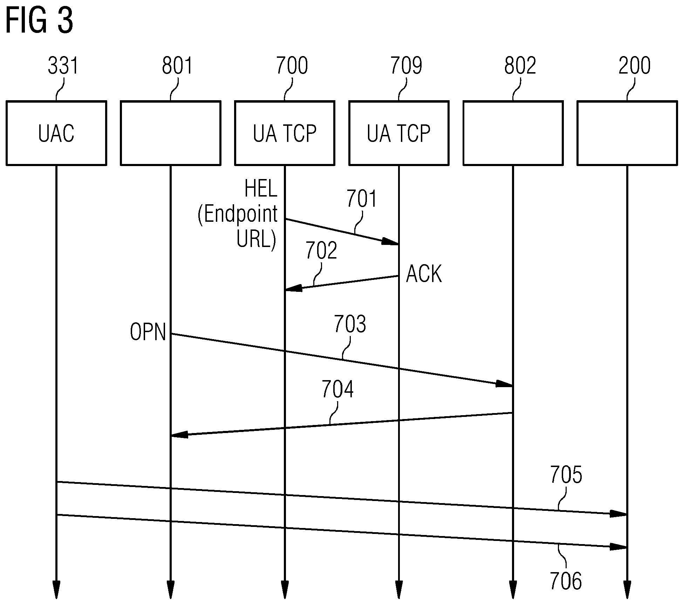

Die Figur 3 zeigt erläuternd den Kommunikationsablauf bei Beginn der Kommunikation zwischen Dienstabnehmer, Client 331 und Dienstanbieter, Server 200. Zunächst wird ein Kanal aufgebaut auf OPC UA TCP Ebene (durch Abfrage HEL mit der gesuchten Endpoint URL), 701. Bei Fig. 3 ist das der für den Client von außen "sichtbare" Endpoint URL, also beispielsweise IP-Adresse des Container-Hosts plus Port 4840 plus einen den Server eindeutig unterscheidenden Pfad wie "/server-A" Diese Anfrage wird durch ACK 702 bestätigt.

Dann wird ein OPC UA Secure Channel aufgebaut zwischen den beiden Kommunikationspartnern 801, 802, mittels OPN 703 und Bestätigung 704. Erst dann kann dann Dienstabnehmer 331 nach einem geeigneten Dienstanbieter 200 suchen 705 und die korrekten Adressen (Endpoint). 706. Zu beachten ist hier immer die Problemstellung, dass der Dienstabnehmer von außen immer über den notorischen Port 4840 zugreifen möchte, diese Adresse aber mit der internen Adresse des Dienstes (in dem Container) nicht übereinstimmt.

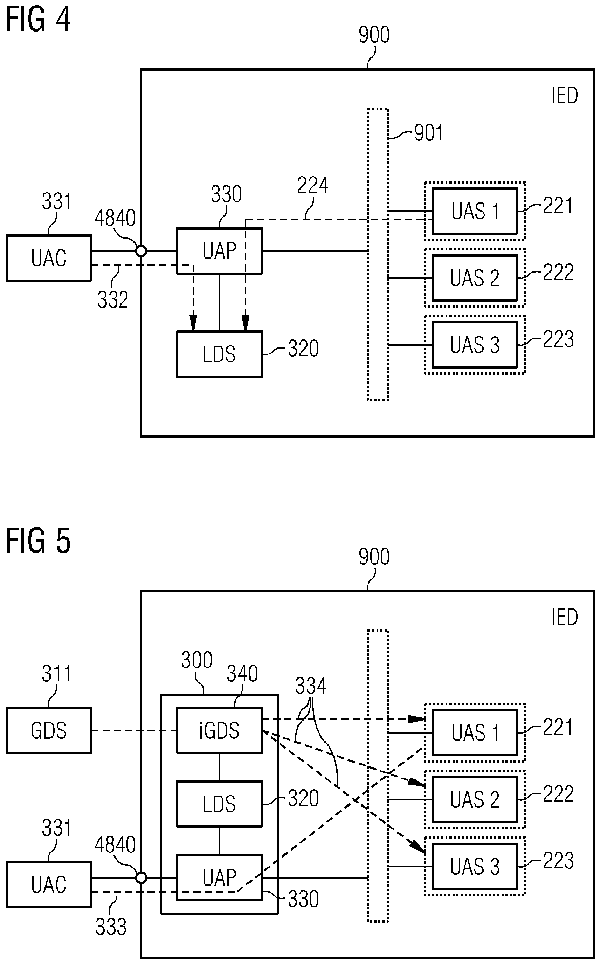

Die Figuren 4 und 5 stellen zur näheren Erläuterung das gleiche Verfahren für mehrere Dienstanbieter 221, 222, 223 dar, welche in dem dargestellten Fall über ein Host-internes Container-Netzwerk, welches zur Abschirmung der Container dient, 901 ansprechbar sind. In Figur 5 wird der Zugriff über den globalen GDS und internen Verzeichnisdienst IGDS gesteuert. 333, 334.

## Patentansprüche

1. Verfahren zur sicheren Bereitstellung eines Dienstes (DCA, 210) durch eine zentrale Bereitstellungsinstanz (APS, 100) auf einem Gerät (IED, 900) zur Ausführung bei Abruf durch einen Dienstabnehmer (UAC, 331), wobei
- dem Dienst (DCA, 210) jeweils zumindest eine Server-Komponente (UAS, 220) zugeordnet ist, die durch eine in die Ablaufsteuerungsumgebung ladbare und dort ausführbare Ablaufsteuerungskomponente gebildet wird,
- dem Gerät (IED, 900) eine eindeutig identifizierbare ablauffähige Instanz des Dienstes (DCA, 210) bereitgestellt wird,
- der Dienst (DCA, 210) bei Bereitstellung ein der Dienstinstanz zugewiesenes eindeutiges Dienstzertifikat (IDC, 190) mitgeliefert und untrennbar verknüpft wird, so dass eine eindeutig identifizierbare Dienstinstanz entsteht, und
- ein dem Dienstzertifikat zugehöriges, ebenfalls eindeutiges Gerätezertifikat (110) erzeugt und an das Gerät (IED, 900) übermittelt wird,
**dadurch gekennzeichnet, dass**
sich das Gerät (IED, 900) bei dem Dienst (DCA, 210) mit dem Gerätezertifikat (110) ausweist (131), und der Dienst das Gerätezertifikat mit Hilfe des Dienstzertifikats (190) prüft,
und das Gerät somit die Autorität erhält für die weitere Durchführung der Bereitstellung des Dienstes erforderliche geschützte Informationen, insbesondere korrekte Adressinformationen, in einem Anwendungsinstanz-Zertifikat (191) an den Dienst zu übertragen (132).

2. Verfahren gemäß Patentanspruch 1,
**dadurch gekennzeichnet, dass**
die Gerätezertifikate (110), die einem Gerät (900) zugwiesen sind, in einem Gerätezertifikat Speicher (TS, 120) auf dem Gerät gespeichert werden.

3. Verfahren gemäß Patentanspruch 1 oder 2,
**dadurch gekennzeichnet, dass**
es sich bei dem Dienstzertifikat (190) um ein gemäß IEEE 802.1AR erzeugten Initial Device Identifier iDevID, handelt.

4. Verfahren gemäß einem der vorherigen Patentansprüche, **dadurch gekennzeichnet, dass**
weitere Funktionen des Dienstes mit den notwendigen Zertifikaten und Informationen versorgt werden können.

5. Verfahren gemäß einem der vorherigen Patentansprüche, **dadurch gekennzeichnet, dass**
das Dienstzertifikat (190) und/oder das Gerätezertifikat (191) um Lizenzinformationen (LI, 11, ...15) ergänzt werden, wobei die Lizenzinformationen den Funktionsumfang der Dienstinstanz bestimmen.

6. Verfahren gemäß Patentanspruch 5,
**dadurch gekennzeichnet, dass**
die Lizenzinformationen (LI) in das Geräte-Zertifikat (110) als User-Extension angefügt sind.

7. Verfahren gemäß Patentanspruch 5 oder 6,
**dadurch gekennzeichnet, dass**
bei der Bereitstellungsinstanz (100) ein weiteres Gerätezertifikat (110) mit aktualisierten Lizenzinformationen (11) erstellt und auf das Gerät (IED 900) übertragen werden kann, so dass der Funktionsumfang der Instanz der Applikation (200) die auf dem Gerät (IED) läuft, geändert werden kann.

8. Verfahren gemäß einem der vorherigen Patentansprüche, **dadurch gekennzeichnet, dass**
bei der Prüfung der Lizenzinformationen (11) das Gerätezertifikat (110) und das Dienst-Zertifikat (190) eine gemeinsame zertifikat-ausstellende Bereitstellungsinstanz (100), sowie dieselbe eineindeutige Adresse aufweisen.

9. Computerprogrammprodukt, das alle für die Umsetzung des Verfahrens gemäß einem der Patentansprüche 1 bis 8 notwendigen Merkmale umfasst zur Durchführung des Verfahrens, wenn es auf einen Computer geladen wird.

10. Gerät (IED, 900) zur sicheren Ausführung eines durch eine zentrale Bereitstellungsinstanz (APS, 100) bereitgestellten Dienstes (DCA, 210) zur Ausführung bei Abruf durch einen Dienstabnehmer (UAC, 331), wobei
- das Gerät (IED, 900) eine eindeutig identifizierbare ablauffähige Instanz des Dienstes (DCA, 210) aufweist, wobei
- der Instanz des Dienstes (DCA, 210) jeweils zumindest eine Server-Komponente (UAS, 220) zugeordnet ist, die durch eine in die Ablaufsteuerungsumgebung ladbare und dort ausführbare Ablaufsteuerungskomponente gebildet wird, und
- der Instanz des Dienstes (DCA, 210) bei Bereitstellung ein der Dienstinstanz zugewiesenes eindeutiges Dienstzertifikat (IDC, 190) mitgeliefert und untrennbar verknüpft wird, so dass eine eindeutig identifizierbare Dienstinstanz (200) entsteht, und
- das Gerät (IED, 900) gleichzeitig ein dem Dienstzertifikat (IDC, 190) zugehöriges, ebenfalls eindeutiges Gerätezertifikat (110) erhält, wobei
das Gerät eine interne Register-Instanz (REG, 310) aufweist, die sich gegenüber der Dienstinstanz (DCA, 210),
mit dem zugehörigen Geräte-Zertifikat (110) ausweist (131), und nach Prüfung mit Hilfe des Dienstzertifikats, ein einem Anwendungsinstanz-Zertifikat (191) in die Applikation überträgt (132),
welches für die weitere Durchführung der Bereitstellung des Dienstes (DCA, 210) erforderliche geschützte Informationen, insbesondere korrekte Adressinformationen, enthält.

11. Gerät (IED, 900) gemäß Patentanspruch 10,
**dadurch gekennzeichnet, dass**
Gerätezertifikat (110) in einem eigens dafür vorgesehenen Gerätezertifikat Speicher (TS, 120) auf dem Gerät (IED, 900) abgelegt werden.

12. Gerät (IED, 900) gemäß Patentanspruch 10 oder 11, **dadurch gekennzeichnet, dass**
die interne Register-Instanz (310), der Teil des Verzeichnisdienstes (300)

13. Gerät (IED, 900) gemäß einem der Patentansprüche 10 bis 12,
**dadurch gekennzeichnet, dass**
der Transport der Applikations-Instanz (DCA, 210) von dem Bereitstellungsinstanz (APS, 100) auf das Gerät (IED, 900) über eine sichere Kommunikation erfolgt, insbesondere über TLS, Transport Layer Security.

14. Gerät (IED, 900) gemäß einem der Patentansprüche 10 bis 13,
**dadurch gekennzeichnet, dass**
es sich bei dem Dienstzertifikat (190) um ein gemäß IEEE 802.1AR erzeugten Initial Device Identifier iDevID oder lDevID, handelt.

15. Gerät (IED, 900) gemäß einem der Patentansprüche 10 bis 14,
**dadurch gekennzeichnet, dass**
das Dienstzertifikat (190) und/oder das Gerätezertifikat (191) um Lizenzinformationen (LI, 11, ...15) ergänzt sind, wobei die Lizenzinformationen den Funktionsumfang der Dienstinstanz bestimmen und einem eigens dafür vorgesehenen Lizenzinformations Speicher (AI) auf dem Gerät (IED, 900) abgelegt.
